# EUROPEAN PATENT APPLICATION

(11) **EP 4 563 933 A1**
(43) Date of publication of application: **04.06.2025**
(21) Application number: 23212849.6
(22) Date of filing: 29.11.2023
(51) Int. Cl.: F41H 5/04, B32B 5/26, B32B 5/28, B29C 70/08

(54) **ANTI-BALLISTIC PROTECTION PANEL**

(71) Applicant: NFM AS, 1400 Ski (NO)
(72) Inventor: Horvei, Toivo, 1423 Ski (NO)
(74) Representative: Bryn Aarflot AS

(57) **Abstract**

An anti-ballistic protection panel (1) is configured for being carried in a tactical garment (5). It comprises cover layers (13) with woven fiber layers (13a) that comprise woven fibers and a cured resin, and a panel core (11) between the cover layers (13), comprising UD layers (11a) that comprise unidirectionally arranged fibers and a cured resin.

## Description

### Technical Field

The present invention relates to an anti-ballistic protection panel of the type that is carried in a tactical garment, such as a tactical vest, by a person. In particular, the anti-ballistic protection panel comprises a composite material with layers of fibers. The fibers are cured with a hardening resin, forming a hard material with good anti-ballistic characteristics.

### Background Art

Using composite materials with fibers, typically polyethylene fibers, and a curable resin to produce anti-ballistic panels have been known for some time. Typically, the resin is cured under elevated pressure and temperature.

One example of such an anti-ballistic panel is disclosed in publication US6389594. In this solution, a hardened composite material is arranged together with a ceramic material to form the panel.

Another example is publication US8979523, which discusses how pressure and elevated temperature can be applied during curing of such panels by using a hydroclave.

The fibers used in the composite material are often ultra-high molecular weight polyethylene (UHMWPE) fibers. However, other types of fibers may also be applied, such as aramid fibers.

Since the mechanical strength of the fibers is higher than the resin used to cure the panels, it is normally an object to have a high fiber to resin ratio. Moreover, in particular for anti-ballistic panels that shall be worn by a person, there is a trade-off between their weight and anti-ballistic capacity.

Despite the anti-ballistic capacity of these types of composite fiber materials, their surface is vulnerable to everyday handling and use. Fibers arranged at the surface may tear if exposed to hard edges. This may result in several fibers becoming loose, which again exposes underlying layers of fibers.

To protect the composite material from such wear, it is common to enclose the composite panels in a fabric envelope.

An object of the present invention may be to provide an anti-ballistic panel that is more cost-effective to produce, while another object may be to provide an anti-ballistic panel that has an improved capacity to weight ratio.

### Summary of invention

According to the present invention, there is provided an anti-ballistic protection panel configured for being carried in a tactical garment, wherein the anti-ballistic protection panel comprises cover layers comprising woven fiber layers that comprise woven fibers and a cured resin and a panel core between the cover layers, comprising UD layers that comprise unidirectionally arranged fibers and a cured resin.

In some embodiments, the relative amount of resin in the panel core is less than the relative amount of resin in the cover layers.

With the term relative amount of resin is meant the ratio between resin and fiber. For instance, the relative amount of resin in the panel core can be below 25 % of the weight of the panel core, while the corresponding relative amount in the cover layers can be above 25 %, for instance more than 30 %.

The resin of the panel core and the resin of the cover layers can be identical or of the same type. This ensures a good binding between the adjacent layers.

The cover layers can preferably form external or outermost surfaces of the anti-ballistic protection panel.

The anti-ballistic protection panel may further a ceramic plate between the panel core and one of the cover layers.

The panel core can comprise a mixture of UD-layers and woven core fiber layers.

The fibers of the UD layers and/or the fibers of the woven fiber layers can be ultra-high molecular weight polyethylene fibers.

Preferably, the panel core and the cover layers have been consolidated in a single, common consolidation step.

The anti-ballistic protection panel can further comprise an edge protection layer that extends about the periphery of the anti-ballistic protection panel and that extends between the said cover layers.

In some embodiments, the edge protection layer can be a layer identical to the cover layers.

The anti-ballistic protection panel can comprise a continuous transition of resin-to-fiber ratio at the interface between the panel core and the cover layer. The continuous transition can be obtained by simultaneous curing of the resins of both the panel core and the cover layers. Moreover, using identical types of resins may also contribute to the continuous transition.

### Detailed description of the invention

While various features of the invention have been discussed in general terms above, a more detailed and non-limiting example of embodiment will be presented in the following with reference to the drawings, in which
- Fig. 1: is a schematic illustration of an anti-ballistic panel worn on the torso of a person;
- Fig. 2a: is a perspective view of the anti-ballistic panel;
- Fig. 2b: is a front view of another embodiment of an anti-ballistic panel;
- Fig. 3: is an illustration of the anti-ballistic panel inserted in a carrier vest that is worn by a person;
- Fig. 4: is a schematic cross section side-view of an anti-ballistic panel according to the invention;
- Fig. 5: is a perspective view of an anti-ballistic panel according to the invention;
- Fig. 6: is a schematic cross section view of an edge portion of an anti-ballistic panel according to the invention;
- Fig. 7: is a diagram illustrating the non-abrupt transition of matrix content at the interface between the panel core and the cover layer; and
- Fig. 8: is another schematic cross section side-view of an anti-ballistic panel according to the invention.

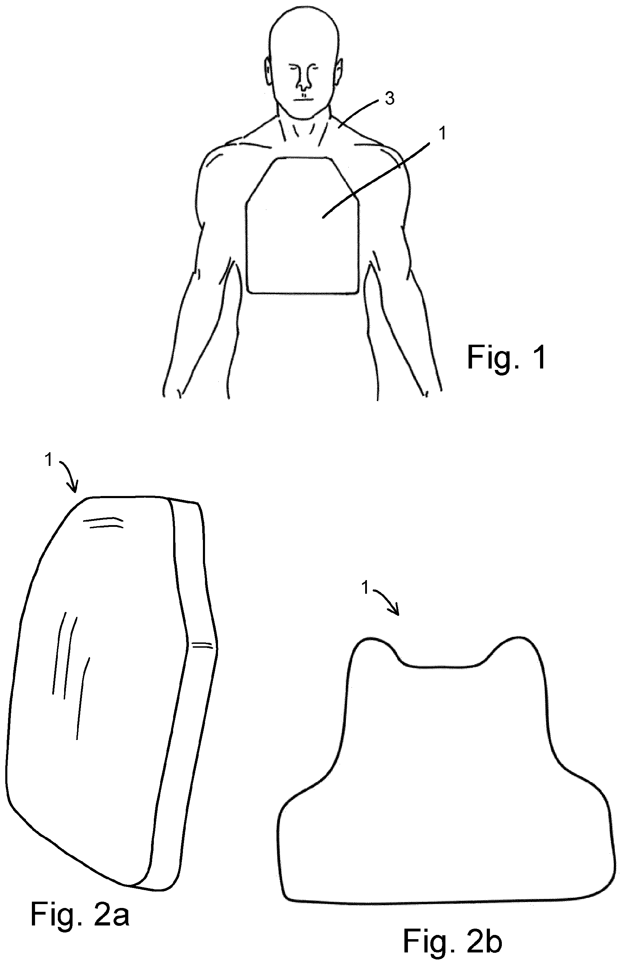

Fig. 1 depicts an anti-ballistic panel 1 according to the present invention placed on the torso of a person 3. As will be shown later, the anti-ballistic panel 1 can typically be carried in a tactical garment, such as a chest panel carried in a tactical vest.

Fig. 2 depicts a perspective view of the anti-ballistic panel 1 shown in Fig. 1.

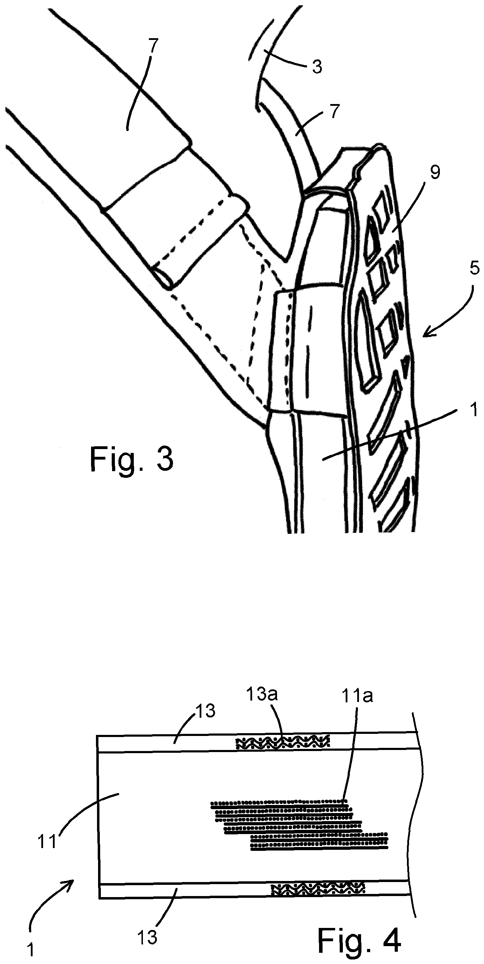

Fig. 3 shows a portion of a tactical garment, here in the form of a tactical vest 5. The tactical vest 5 has two straps 7 that extend from a chest portion 9 and along respective sides of the neck of a person 3.

The chest portion 9 of the tactical vest 5 is configured to carry the anti-ballistic panel 1 according to the invention. The anti-ballistic panel 1 can be inserted and removed as required. In addition to the chest portion 9, the tactical vest 5 may have a corresponding back portion (not shown) configured to carry an additional anti-ballistic panel 1.

It will be appreciated that while the shown embodiment involves a tactical vest 5 configured to carry an anti-ballistic panel at the chest portion 9 and possibly the back portion, the anti-ballistic panel 1 according to the invention may also be carried elsewhere on the person 3. For instance, the anti-ballistic panel 1 may be carried at the sides of the shoulders of the person 3, or in front of the neck.

The structure of the anti-ballistic panel 1 according to the invention will now be discussed with reference to Fig. 4. In this image, a portion of the anti-ballistic panel 1 is shown with a schematic cross-section side view. The anti-ballistic panel 1 comprises a panel core 11. In addition, arranged at the opposite sides of the panel core 11 the anti-ballistic panel 1 comprises cover layers 13.

The panel core 11 comprises UD layers 11a of unidirectional (UD) fibers. The UD layers are stacked on top of each other with alternating direction, typically 90 degrees apart. The UD layers 11a comprise a curable resin. The amount of resin with respect to fibers is below 30 weight-%.

The cover layer 13 comprises a stack of woven fiber layers 13a. The woven fiber layers 13a comprise a curable resin in addition to the woven fibers. The amount of resin with respect to fibers is higher than the corresponding amount for the UD layers 11a of the panel core 11.

By using layers of woven fibers in the cover layer 13, one reduces the risk of fibers being torn off from the surface. Moreover, by using an increased amount of resin, one obtains that the fibers are better fixated to the anti-ballistic panel 1. In addition, the increased amount of resin results in a smoother surface.

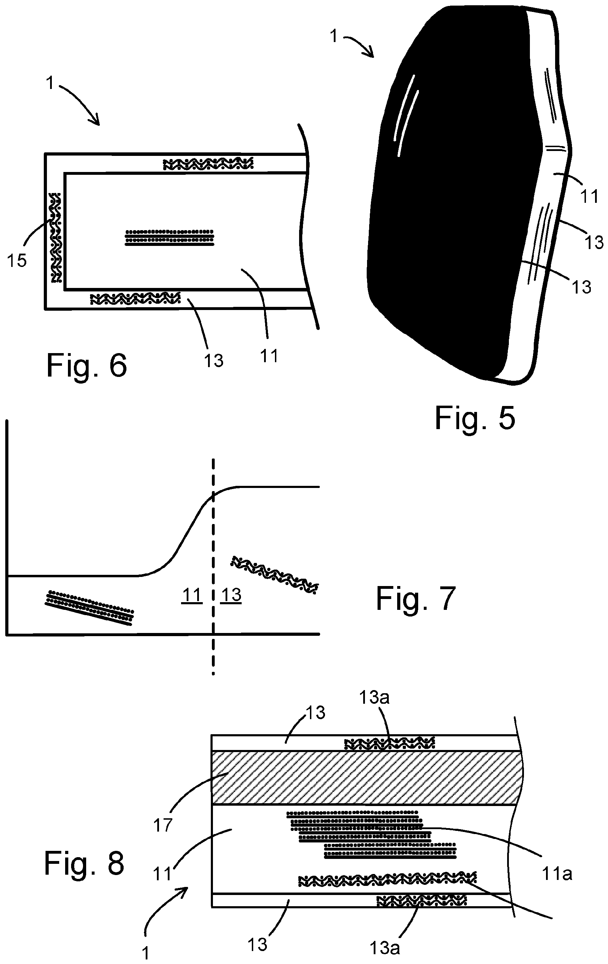

In some embodiments, one may use a resin in the cover layer 13 that has a pigment (i.e. a colour) added to it. In this manner, one may produce a surface that has a desired colour. Such an embodiment is illustrated in Fig. 5, where the cover layers 13 are provided with a colour different from the panel core 11.

Having a different colour in the cover layer 13 can also make excessive wear easier to detect, since an exposed portion of the panel core 11 will be more visible through a worn off portion of the cover layer 13.

As a result of the cover layers 13, one can avoid using a fabric envelope to protect the anti-ballistic panel 1. Moreover, since the cover layers 13 are made up of strong fibers, they provide anti-ballistic properties that exceeds the anti-ballistic properties provided by the said fabric envelope.

Advantageously, the panel core 11 and the cover layers 13 can be consolidated with a common consolidation step involving elevated temperature and elevated pressure. For instance, the common process step may be performed with a hydroclave (not shown). Since the relative resin content of the cover layers 13 is larger than for the panel core 11, some resin from the woven fiber layers 13a may enter the UD layers 11a. This will result in a continuous or non-stepped transition of the relative resin content at the interface between the panel core 11 and the cover layers 13. This contributes to a good binding between the panel core 11 and the cover layers 13.

Advantageously, the cover layers 13 can be arranged in contact with the panel core 11, i.e. without additional interposed further layers.

In some embodiments, the resin used in the UD layers 11a and the resin used in the woven fiber layers 13a can be identical or at least of the same type, such that a good binding between the panel core 11 and the cover layers 13 is obtained.

In some embodiments, the fibers of the UD layers 11a are UHMWPE fibers. Moreover, in some embodiments, the fibers of the woven fiber layers 13a are UHMWPE fibers. Advantageously, the fibers of both the UD layers 11a and the fibers of the woven fiber layers 13a are UHMWPE fibers.

In some embodiments, such as shown in Fig. 6, the periphery of the anti-ballistic panel 1 is provided with an edge protection layer 15. The edge protection layer 15 could typically extend along the portion shown in white of the panel shown in Fig. 5, i.e. along the lateral surface of the panel core 11. The edge protection layer 15 may advantageously be of the same type as the cover layers 13. In this way, the fibers of the panel core 11 are protected also at the lateral sides or lateral surface of the anti-ballistic panel 1.

Fig. 7 is a diagram illustrating the non-abrupt transition of matrix content at the interface between the panel core and the cover layer. In this diagram, the Y-axis represents the ratio between the weight of resin to fiber in the panel core 11 and the cover layer 13, respectively. The dashed line illustrates the interface between the panel core 11 and the cover layer 13. As the diagram illustrates, a continuous or non-abrupt (non-stepped) change of ratio is obtained.

Fig. 8 depicts a schematic illustration similar to Fig. 4. In this embodiment, there is arranged a ceramic plate 17 between the panel core 11 with the UD layers 11a and the cover layer 13.

Moreover, in the embodiment shown in Fig. 8, the panel core 11 comprises one or more woven core fiber layers 19a in addition to the UD layers 11a.

## Claims

1. An anti-ballistic protection panel (1) configured for being carried in a tactical garment (5), wherein the anti-ballistic protection panel (1) comprises
- cover layers (13) comprising woven fiber layers (13a) that comprise woven fibers and a cured resin;
- a panel core (11) between the cover layers (13), comprising UD layers (11a) that comprise unidirectionally arranged fibers and a cured resin.

2. An anti-ballistic protection panel (1) according to claim 1, **characterized in that** relative amount of resin in the panel core (11) is less than the relative amount of resin in the cover layers (13).

3. An anti-ballistic protection panel (1) according to claim 2, **characterized in that** the resin of the panel core (11) and the resin of the cover layers (13) are identical or of the same type.

4. An anti-ballistic protection panel (1) according to any one of the preceding claims, **characterized in that** the cover layers (13) form external or outermost surfaces of the anti-ballistic protection panel (1).

5. An anti-ballistic protection panel (1) according to any one of the preceding claims, **characterized in that** it further a ceramic plate (17) between the panel core (11) and one of the cover layers (13).

6. An anti-ballistic protection panel (1) according to one of the preceding claims, **characterized in that** the panel core (11) comprises a mixture of UD-layers (11a) and woven core fiber layers (19a).

7. An anti-ballistic protection panel (1) according to any one of the preceding claims, **characterized in that** the fibers of the UD layers (11a) and/or the fibers of the woven fiber layers (13a) are ultra-high molecular weight polyethylene fibers.

8. An anti-ballistic protection panel (1) according to any one of the preceding claims, **characterized in that** the panel core (11) and the cover layers (13) have been consolidated in a single, common consolidation step.

9. An anti-ballistic protection panel (1) according to any one of the preceding claims, **characterized in that** it further comprises an edge protection layer (15) that extends about the periphery of the anti-ballistic protection panel (1) and that extends between the said cover layers (13).

10. An anti-ballistic protection panel (1) according to claim 9, **characterized in that** the edge protection layer (15) is a layer identical to the cover layers (13).

11. An anti-ballistic protection panel (1) according to any one of the preceding claims, **characterized in that** it comprises a continuous transition of resin-to-fiber ratio at the interface between the panel core (11) and the cover layer (13).
